# EUROPEAN PATENT SPECIFICATION

(11) **EP 2 234 374 B1**
(45) Date of publication and mention of the grant of the patent: **07.09.2011**
(21) Application number: 10250256.4
(22) Date of filing: 15.02.2010
(51) Int. Cl.: H04L 29/06, G06F 21/00

(54) **Content reproducing device and method**
Inhaltswiedergabevorrichtung und -verfahren
Dispositif et procédé de reproduction de contenu

(30) Priority: 24.03.2009 JP 2009072673
(43) Date of publication of application: 29.09.2010
(73) Proprietor: Sony Corporation, Tokyo (JP)
(72) Inventor: Goto, Norifumi, Tokyo (JP); Maruyama, Shinya, Tokyo (JP)
(74) Representative: Scaddan, Gareth Casey

(56) References cited:
- EP-A2- 1 262 969
- EP-A2- 1 607 827
- EP-A2- 1 607 966
- WO-A1-2004/017560

## Description

### Field of the Invention

The invention relates to a content reproducing device and a content reproducing method.

### Background of the Invention

Recently, distribution of content data via a network has been widely prevalent. Content reproducing devices such as personal computers (PCs) and video-processing devices can obtain content data distributed as mentioned above.

However, when content data is encrypted for the purpose of copyright protection, it is necessary for the content reproducing devices to obtain content keys used for decoding the content data and license information including reproduction conditions used for reproducing the content data.

Here, for example, the license information includes an upper limit of the number of times reproduction can be performed and an available time period for reproduction (for example, within 24 hours from the initial reproduction time). Therefore, the content reproducing devices manage a reproduction history including items such as the number of times reproduction has been performed and the initial reproduction time so as to determine whether or not the reproduction conditions for the content data are satisfied. In addition, reproduction restriction of content data by using license information is described in patent document 1 (see Japanese Unexamined Patent Application Publication No. 2001-215974).

When destruction of data corresponding to the reproduction history of the content data occurs in the above-mentioned content reproducing device, a problem occurs in such a way that the content data can be reproduced beyond a normal reproduction condition. For example, when destruction of data corresponding to the initial reproduction time of the content data occurs, the next reproduction time is managed as the initial reproduction time. Therefore, it is supposed that an available time period for reproduction of the content data will be extended.

EP 1 607 966 A2 describes a content reproduction apparatus and method which can manage a use state for each one, two or more tracks included in a content and perform prescribed updating irrespective of the number of tracks reproduced in an overlapping relationship.

### Summary of the Invention

Various respective aspects and features of the invention are defined in the appended claims. Combinations of features from the dependent claims may be combined with features of the independent claims as appropriate and not merely as explicitly set out in the claims.

Taking the above problem into account, it is desirable to provide a newly-improved content reproducing device and a newly-improved content reproducing method which are capable of preventing the content data from being reproduced beyond the normal reproduction condition in the license information.

According to an embodiment of the present invention, there is provided a content reproducing device including:
a communication section configured to receive license information corresponding to content data;
a recording management section configured to record the license information, reproduction history of the content data, and identification information of the license information in a storage medium;
a reproduction section; and
a license evaluation section configured to allow the reproduction section to reproduce the content data when the reproduction history satisfies a reproduction condition specified in the license information and the identification information of the license information is recorded in the storage medium, and not to allow the reproduction section to reproduce the content data when the identification information of the license information is not recorded in the storage medium
   wherein the recording management section is configured to delete the identification information of the license information recorded in the storage medium when the destruction of data corresponding to the reproduction history of the content data occurs in the storage medium.

When destruction of data corresponding to at least one of the reproduction history of the content data and the identification information of the license information occurs in the storage medium, the recording management section may delete the identification information of the license information recorded in the storage medium.

The recording management section may record the identification information of the license information, the identification information being associated with information indicating a term of validity, in the recording medium. In addition, the recording management section may delete an expired term of validity and the identification information of the license information, the identification information being associated with the expired term of validity, from the storage medium.

The license information includes a content key used for decoding corresponding content data, and the content key is encrypted in such a manner that the encrypted content key can be decoded by using a user key corresponding to a user as an object to which the license information is provided. In addition, the recording management section may record the one or more user keys, which are provided by the license providing device providing the license information, in the storage medium, and delete the one or more user keys in addition to the identification information of the license information from the storage medium when destruction of data corresponding to the reproduction history of the content data occurs in the storage medium.

When a user key which is not recorded in the storage medium is obtained from the license providing device, the recording management section may delete at least one of the one or more user keys recorded in the storage medium if there is insufficient memory area for the obtained user key in the storage medium.

The recording management section may record the one or more user keys in such a structure that individual destruction of data corresponding to the one or more user keys can be detected.

The recording management section records specific information in the storage medium when the license information is transferred from the communication section to an information processing device, and it is not necessary for the license evaluation section to allow the reproduction section to reproduce the content data when the specific information is recorded in the storage medium.

In addition, according to an embodiment of the present invention, there is provided a content reproducing method including the steps of:
receiving license information;
recording the license information and identification information of the license information in a storage medium;
reproducing content data on the basis of the license information;
recording reproduction history of the content data;
allowing the reproduction section to reproduce the content data when the reproduction history satisfies a reproduction condition specified in the license information and the identification information of the license information is recorded in the storage medium; and
not allowing the reproduction section to reproduce the content data when the identification information of the license information is not recorded in the storage medium; wherein when destruction of data corresponding to the reproduction history of the content data occurs in the storage medium, the identification information of the license information recorded in the storage medium is deleted.

When destruction of data corresponding to at least one of the reproduction history of the content data and the identification information of the license information occurs in the storage medium, the recording management section may delete the identification information of the license information recorded in the storage medium.

### Brief Description of the Drawings

Embodiments of the invention will now be described with reference to the accompanying drawings, throughout which like parts are referred to by like references, and in which:
Fig. 1 is a diagram illustrating the structure of a client server system according to an embodiment of the present invention;
Fig. 2 is a diagram illustrating an example of management of a client, the management being performed by a license server;
Fig. 3 is a diagram illustrating a configuration example of license information;
Fig. 4 is a block diagram illustrating a hardware configuration of the client;
Fig. 5 is a function block diagram illustrating the structure of the client according to the embodiment;
Fig. 6 is a diagram illustrating an example of a data structure of a user key in a memory section;
Fig. 7 is a diagram illustrating an example of a license ID list;
Fig. 8 is a diagram illustrating a flow of registration processing for a client in a client server system according to the embodiment;
Fig. 9 is a diagram illustrating a flow of registration processing for a client in a license server and a client, both relating to the embodiment;
Fig. 10 is a diagram illustrating a flow of registration-deletion processing for the client in the client server system according to the embodiment;
Fig. 11 is a diagram illustrating a flow of registration-deletion processing for the client in the license server and the client, both relating to the embodiment;
Fig. 12 is a diagram illustrating a flow of reproduction control performed by the client relating to the embodiment;
Fig. 13 is a diagram illustrating a flow of processing performed, at the time of destruction of data, by the client relating to the embodiment;
Fig. 14 is a diagram illustrating a flow of reproduction control performed, after destruction of data, by the client relating to the embodiment;
Fig. 15 is a diagram illustrating a flow of reproduction control performed by the client according to the embodiment;
Fig. 16 is a diagram illustrating a flow of processing performed, at the time of destruction of data, by the client according to the embodiment;
Fig. 17 is a diagram illustrating a flow of reproduction control performed, after destruction of data, by the client according to the embodiment;
Fig. 18 is a flowchart illustrating processing performed by a recording management section at the time of destruction of data;
Fig. 19 is a flowchart illustrating a flow of management of the license ID list, the management being performed by the recording management section; and
Fig. 20 is a diagram illustrating a flow of processing performed when the license information is transferred between the clients.

### Description of the Example Embodiments

Hereinafter, example embodiments of the present invention will be described in detail with reference to the figures. In addition, in the specification and the figures, structural elements having virtually identical functions and configurations will be assigned with the same numbers and repeated description thereof will be omitted.

In addition, in the specification and the figures, structural elements having virtually identical functions and configurations will be assigned with different alphabetic characters following the same reference numbers and discriminated in some cases. For example, structural elements having virtually identical functions and configurations are discriminated in such a way that a client 20A, client 20B, and client 20C are discriminated from one another as necessary. However, when it is not necessary to discriminate structural elements having virtually identical functions and configurations from one another, these structural elements are assigned with only the same number. For example, when it is not necessary to discriminate the client 20A, client 20B, and client 20C from one another, "client 20" is used simply.

In addition, the example embodiments will be described in the following order.
1. General Description of Client Server System
2. Structure of Client
   2-1. Hardware Configuration of Client
   2-2. Function of Client
3. Operation of Client Server System
   3-1. Registration Processing for Client
   3-2. Registration-Deletion Processing for Client
   3-3. Acquisition of License Information and Reproduction Control for Content data
   3-4. Processing at the time of Destruction of Data
   3-5. Management of License ID List
   3-6. Transfer of License Information between Clients
   3-7. Destruction and Restoration of User Key
4. General Overview

### [1. General-Description of Client Server System]

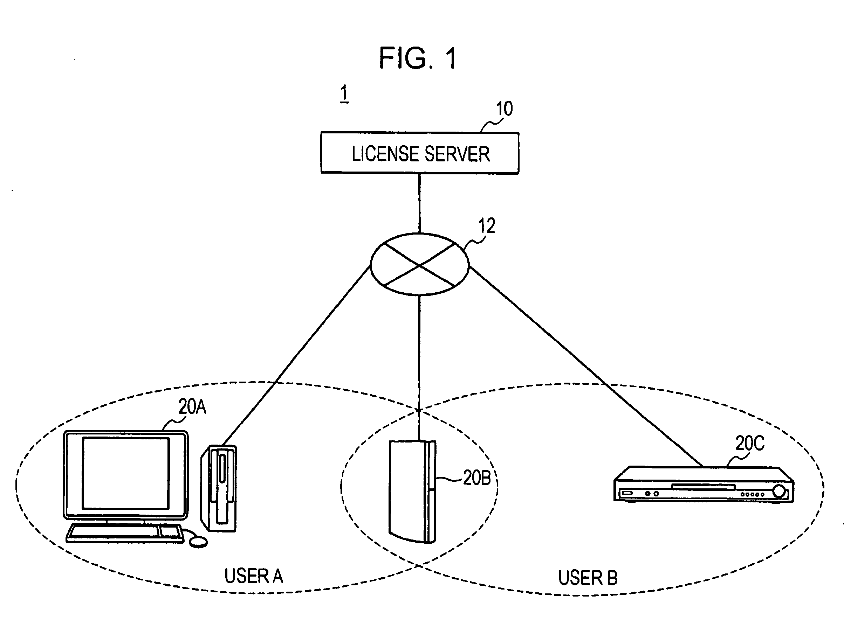

First, an outline of a client server system 1 according to an embodiment of the present invention will be described with reference to Figs. 1 to 3.

Fig. 1 is a diagram illustrating the structure of the client server system 1 according to the embodiment. As shown in Fig. 1, the client server system 1 includes a license server 10, a network 12, a client 20A, a client 20B, and a client 20C. The license server 10 functions as a content providing device, and the clients 20A, 20B, and 20C function as content reproducing devices respectively. In addition, the license server 10 and the clients 20A, 20B, and 20C are connected to one another via the network 12.

The client 20 obtains license information corresponding to content data from the license server 10 and reproduces the content data by using the obtained license information. More specifically, the client 20 determines whether or not a condition relating to a later-mentioned license ID list and a reproduction condition included in the license information are satisfied. Then, when the both conditions are satisfied, the client 20 can decode the content data by using a content key included in the license information and reproduce the decoded content data. In addition, the client 20 can obtain the content data by using various obtaining methods. For example, the client 20 may obtain the content data from the license server 10 or obtain the content data from another content server (not shown) via the network 12. Furthermore, the client 20 may obtain the content data from a broadcasting station or another client 20.

In addition, the client 20 is utilized by one or more users. For example, as shown in Fig. 1, the client 20A is utilized by a user A, the client 20C is utilized by a user B, and the client 20B is utilized by both the user A and the user B.

More specifically, it is assumed that the client 20A is set up in a father's room in a house and utilized by the father, the client 20C is set up in a child's room and utilized by the child, and the client 20B is set up in a living room and utilized by both the father and the child. However, it is not necessarily the case that the term "user" used in the specification indicates a person, and "user" may instead indicate a group including a plurality of persons. For example, the user A may indicate a group including the father and a mother.

In addition, in Fig. 1, the client 20A represents a PC, the client 20B represents a home-use game console, and the client 20C represents a home-use video processing device, for example. However, the client 20 is not limited to this example. For example, the client 20 may be an information processing device such as a personal digital assistant (PDA), a household electrical appliance, a mobile phone, a personal handy phone system (PHS), a portable music player, a portable video processing device, or a portable game console.

In addition, the content data reproduced by the client 20 may be music data such as music, speeches, and radio programs, video data such as movies, television programs, video programs, photographs, documents, pictures, and figures, games, and software.

The network 12 is a wired or wireless transmission channel used for information transmitted from a device connected to the network 12. For example, examples of the network 12 may include public networks such as the Internet, telephone networks, and satellite communication networks and various kinds of local area networks (LANs) including Ethernets (registered trademark), and wide area networks (WANs). In addition, examples of the network 12 may include leased line networks such as internet protocol-virtual private networks (IP-VPNs).

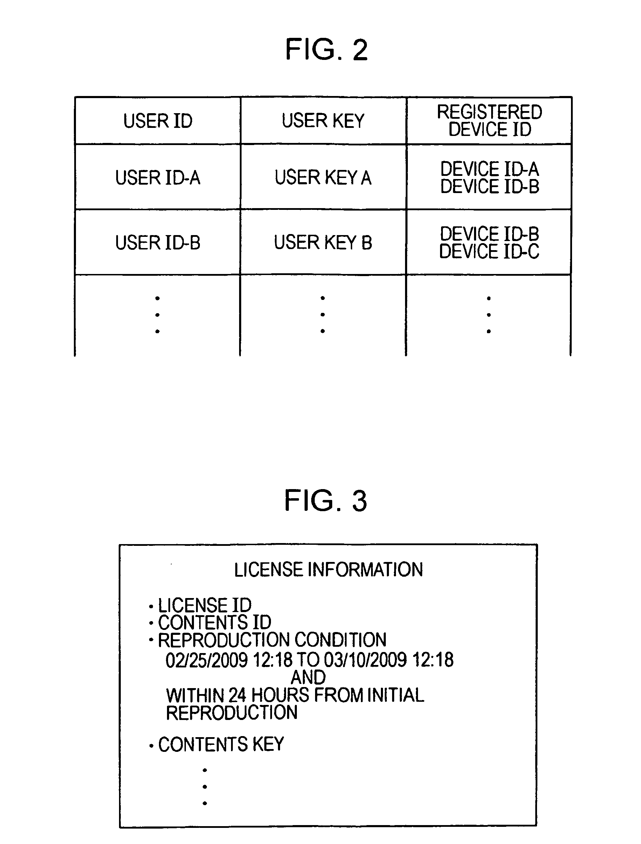

The license server 10 performs registration management for the client 20 and transmits the license information to the client. The registration management for the client 20 performed by the license server 10 will be described hereinafter with reference to Fig. 2. Then, after that, the license information transmitted by the license server 10 will be described with reference to Fig. 3.

Fig. 2 is a diagram illustrating an example of management of the client 20, the management being performed by the license server. As shown in Fig. 2, the license server 10 associates user IDs, user keys, and registered device IDs with one another and manages them. For example, as shown in Fig. 2, the license server 10 associates a user ID-A for the user A, a user key A transmitted to the clients 20A and 20B, and a device ID-A for the client 20A and a device ID-B for the client 20B with one another and manages them.

The user IDs shown in Fig. 2 are identification information assigned to individual users. In addition, the user key includes a public key and a secret key and is transmitted to the registered client 20. The registered device ID is identification information for the registered client.

As shown in Fig. 2, since the license server 10 manages a registration of the client 20 for each user, the license server 10 can restrict the number of registrations of the client 20 for each user. Specifically, the license server 10 may set an upper limit on the number of registrations for each user and register a new client 20 only when the current number of registrations is lower than the upper limit.

In addition, while, in the above-mentioned example, the license server 10 manages a registration of the client 20 for each user and the same key is assigned to the plurality of clients 20 belonging to the same user, the embodiment is not limited to this example. For example, the license server 10 may assign a unique key to each client 20 while using no concept of individual "users".

Fig. 3 is a diagram illustrating a configuration example of the license information. As shown in Fig. 3, the license information includes a license ID, a content ID, a reproduction condition, and a content key or the like.

The license ID is identification information used for the license information. The content ID is identification information used for the content data corresponding to the license information. The reproduction condition is a condition used for allowing reproduction of the content data on the basis of the license information. The content key is encrypted by using a user key (public key) for a user to which the license information is to be transmitted, and utilized so as to decode the content data corresponding to the license information.

Examples of the reproduction condition include "within a predetermined period from transmission (purchase) of license information", "within a predetermined period from initial reproduction", "the number of times reproduction of content data has been performed is less than or equal to a predetermined number of times", and "total reproduction time is less than or equal to a predetermined time".

Regarding the reproduction condition "within a predetermined period from transmission (purchase) of license information", the license server 10 describes the current time as the start time of a predetermined period and a time, which is a predetermined period of time after the start time, as the end time. "2009/02/25 12:18" shown in Fig. 3 corresponds to the start time of the predetermined period, and "2009/03/10 12:18" corresponds to the end time of the predetermined period.

On the other hand, at what time the initial reproduction is performed depends on the user. Therefore, regarding the reproduction condition "within a predetermined period from initial reproduction", the license server 10 is not capable of describing a specific period in the license information transmitted to the client 20. Accordingly, regarding the reproduction condition "within a predetermined period from initial reproduction", the license server 10 may describe, for example, "within 24 hours from the initial reproduction" as shown in Fig. 3.

### [2. Structure of Client]

### (2-1. Hardware Configuration of Client)

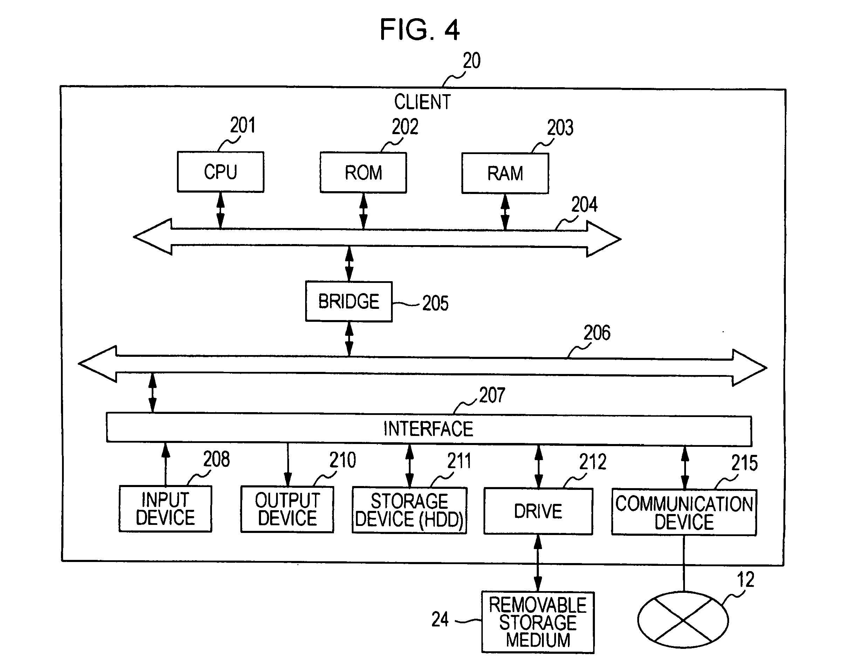

The outline of the client server system 1 according to the embodiment has been described above with reference to Figs. 1 to 3. Next, a hardware configuration of the client 20 will be described with reference to Fig. 4.

Fig. 4 is a block diagram illustrating the hardware configuration of the client 20. The client 20 includes a central processing unit (CPU) 201, a read only memory (ROM) 202, a random access memory (RAM) 203, and a host bus 204. In addition, the client 20 includes a bridge 205, an external bus 206, an interface 207, an input device 208, an output device 210, a storage device (HDD) 211, a drive 212, and a communication device 215.

The CPU 201 functions as an arithmetic processing device and a control device and controls overall operation of the client 20 according to various kinds of programs. In addition, a microprocessor may be used as the CPU 201. The ROM 202 stores programs used by the CPU 201 and arithmetic parameters. The RAM 203 primarily stores programs executed by the CPU 201 and parameters arbitrarily varying in the executed programs. These components are connected with one another through the host bus 204 including the CPU bus.

The host bus 204 is connected to the external bus 206, which is for example a Peripheral Component Interconnect/Interface (PCI) bus, through the bridge 205. In addition, while the host bus 204, the bridge 205, and the external bus 206 are separately provided, functions of these buses and bridge may be implemented in one bus.

For example, the input device 208 includes input means, which is used by a user to input information, such as a mouse, a keyboard, a touch panel, buttons, a microphone, switches, or levers, and an input control circuit which generates an input signal on the basis of the user's input and outputs the generated input signal to the CPU 201. By operating the input device 208, the user of the client 20 can input various kinds of data to the client 20 and instruct the client 20 to perform a processing operation.

Examples of the output device 210 include display devices such as a cathode ray tube (CRT) display device, a liquid crystal display (LCD) device, an organic light emitting diode (OLED) device, and lamps. Furthermore, the output device 210 includes an audio output device such as a speaker and headphones. For example, the output device 210 outputs the reproduced content data. Specifically, the display device displays, in text or image format, various kinds of information such as reproduced video data or the like. On the other hand, the audio output device converts reproduced audio data into an audio signal and outputs the audio signal.

The storage device 211 is a device used to store data, the device being provided as an example of a memory section included in the client 20 according to the embodiment. The storage apparatus 211 may include a storage medium, a recording device used to record data in the storage medium, a read-out device used to read out data from the storage medium, and a deleting device used to delete data recorded in the storage medium. The storage device 211 includes a hard disk drive (HDD) for example. The storage device 211 drives a hard disk and stores programs executed by the CPU 201 and various kinds of data. In addition, for example, the storage device 211 records the user key, later-mentioned status information, and the license ID list.

The drive 212 is a reader/writer used for a storage medium and built into or attached to the client 20. The drive 212 reads out information recorded in a removable storage medium 24 such as an attached magnetic disk, an optical disk, a magneto-optical disk, or a semiconductor memory and outputs the read-out information to the RAM 203. For example, the license information is recorded in the removable recording medium 24.

For example, the communication device 215 is a communication interface including a communication device used to connect to the network 12. In addition, the communication device 215 may be a communication device compliant with a wireless local area network (LAN) standard, a communication device compliant with a wireless USB standard, or a wired communication device which performs wired communication. The communication device 215 transmits and receives the license information and various kinds of information, such as the content data, among the license server 10 and other clients 20 through the network 12.

In addition, in the above description, the hardware configuration of the client 20 has been explained with reference to Fig. 4, and the hardware of the license server 10 may be configured in virtually the same way as the client 20. Therefore, repeated description thereof will be omitted.

### (2-2. Function of Client)

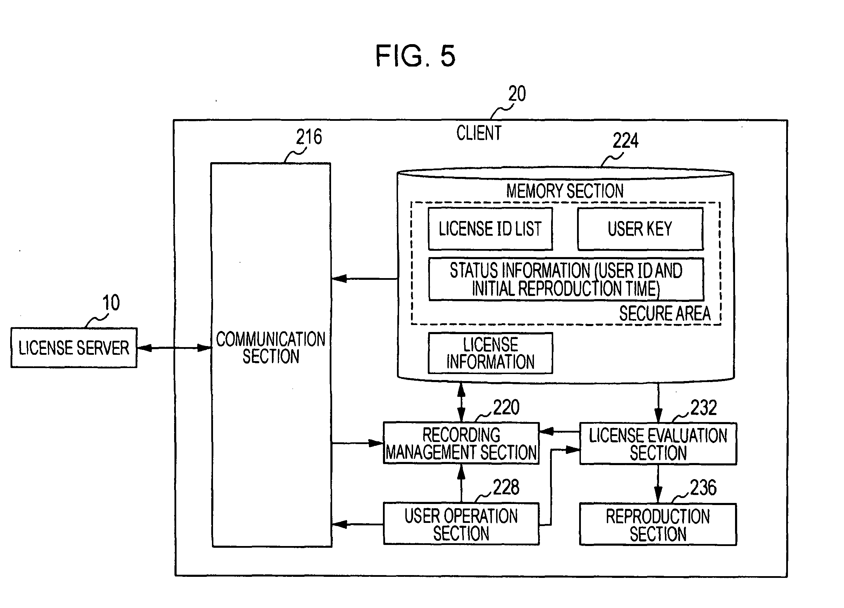

Next, a function of the client 20 according to the embodiment will be described with reference to Figs. 5, 6, and 7.

Fig. 5 is a functional block diagram illustrating the structure of the client 20 according to the embodiment. As shown in Fig. 5, the client 20 includes a communication section 216, a recording management section 220, a memory section 224, a user operation section 228, a license evaluation section 232, and a reproduction section 236. The communication section 216, the recording management section 220, the license evaluation section 232, and the reproduction section 236 are realized by installing programs in the client 20, the programs being used for performing functions of these components respectively. Namely, arithmetic processing and control operations according to the programs are performed by cooperation between the CPU 201 and the RAM 203 or the like which are embedded in the client 20. Accordingly, these components are realized.

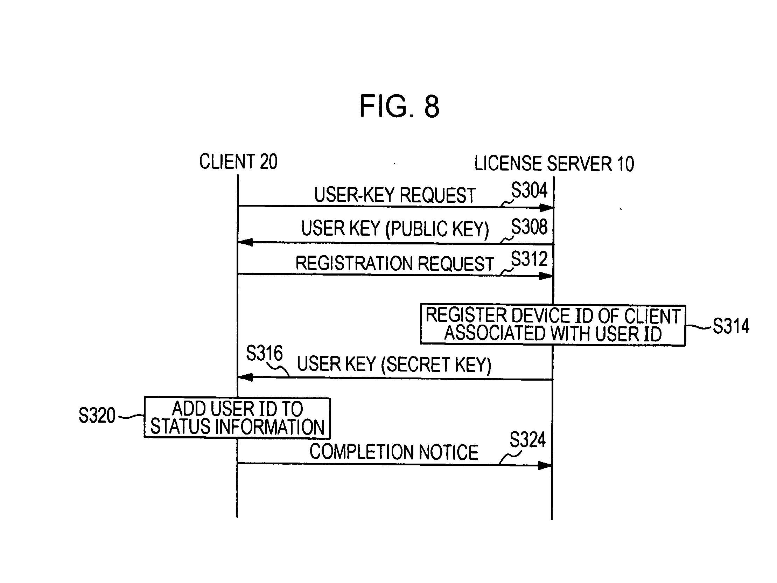

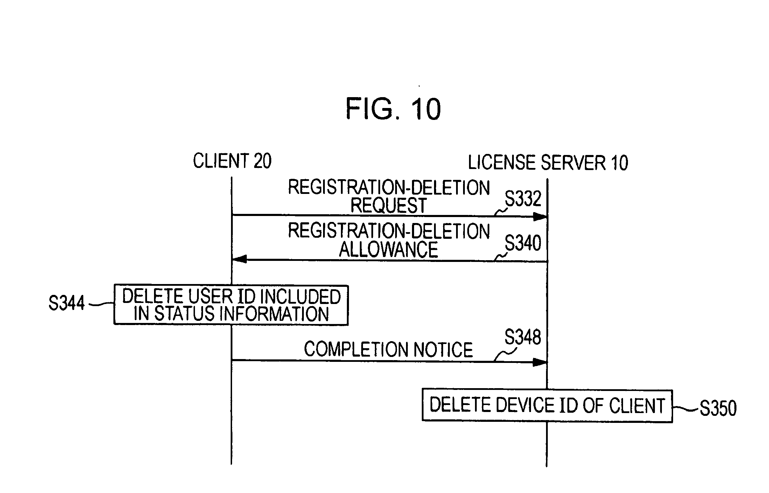

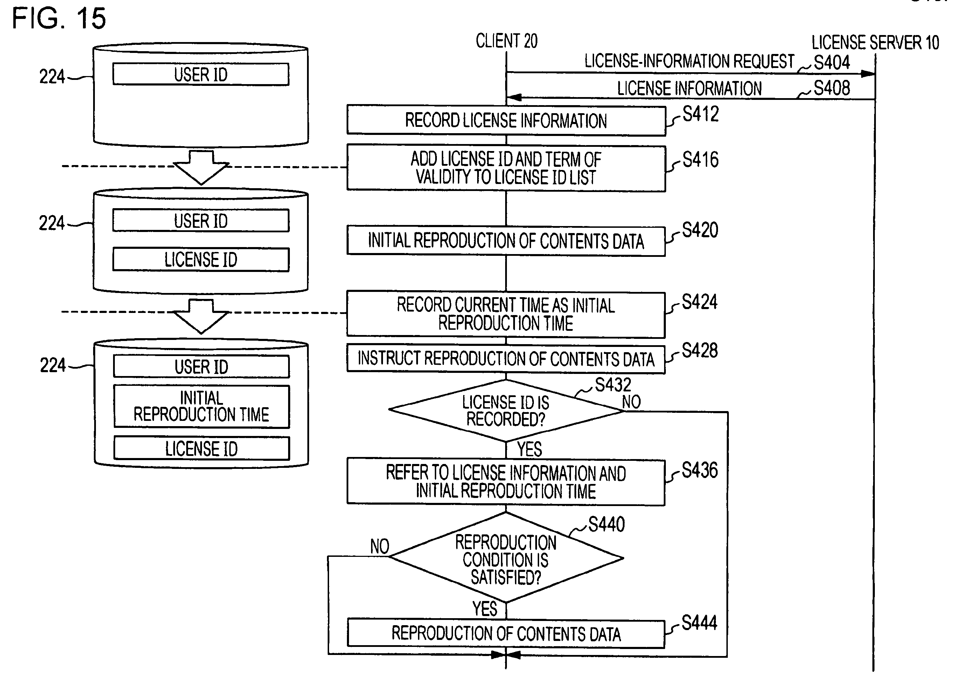

Between the communication section 216 and the license server 10, communication for registration processing for the client 20, registration-deletion processing for the client 20, and acquisition of license information is performed in accordance with a predetermined protocol. The registration processing will be described with reference to Fig. 8, the registration-deletion processing will be described with reference to Fig. 10, and the acquisition of license information will be described with reference to Fig. 15.

The recording management section 220 manages information in the memory section 224 by performing processing such as recording of information in the memory section 224, updating of information recorded in the memory section 224, and deletion of information recorded in the memory section 224 or the like.

For example, the recording management section 220 records status information and the license information, which is obtained from the license server 10 by using the communication section 216, in the memory section 224. The status information includes registration information indicating whether or not the client 20 is registered in the license server 10 and reproduction history of the content data.

Specifically, as shown in Fig. 5 the recording management section 220 may record the user ID as registration information when the client 20 is registered in the license server 10. In addition, when the initial reproduction of content data is performed, the recording management section 220 may record the initial reproduction time as the reproduction history of the content data. In addition, the recording management section 220 may record the number of times reproduction of the content data has been performed as the reproduction history of the content data.

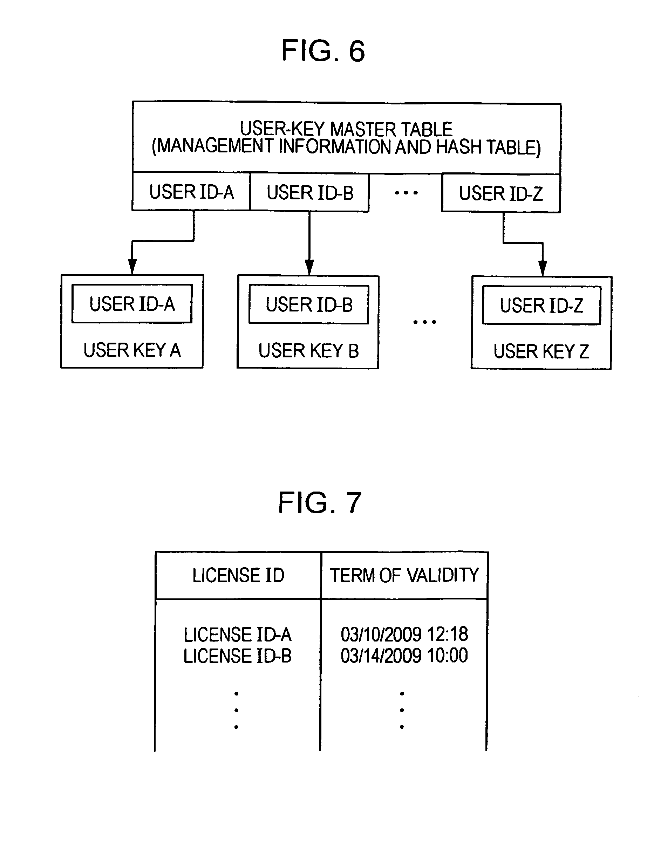

In addition, the recording management section 220 records one or more user keys, which the license server 10 assigns to the client 20, in the memory section 224 in such a structure that individual destruction of data corresponding to the one or more user keys can be detected. The data structure of the user key in the memory section 224 will be described with reference to Fig. 6, hereinafter.

Fig. 6 is a diagram illustrating an example of the data structure of the user key in the memory section 224. As shown in Fig. 6, the recording management section 220 individually records each user key in the memory section 224. In addition, each user key can be searched for by referring to a user-key master table by using a hash value of the user key as a key.

When a plurality of user keys are recorded in the memory section 224, destruction of data corresponding to the user keys can be detected in units of user keys by using the above-mentioned data structure. Therefore, when destruction of data corresponding to a user key occurs, the recording management section 220 can specify the user key corresponding to the destroyed data and delete only the specified user key. Therefore, influences of the destruction of data on users using other user keys can be reduced.

In addition, when the recording management section 220 records the license information in the memory section 224, the recording management section 220 extracts a license ID corresponding to the license information and a term of validity from the license information and adds them to the license ID list. Namely, when the recording management section 220 duly obtains the license information, the recording management section 220 adds the license ID corresponding to the license information and the term of validity to the license ID list. In addition, the recording management section 220 may extract the end time of a period, described in a reproduction condition of the license information, as the term of validity.

Fig. 7 is a diagram illustrating an example of the license ID list. As shown in Fig. 7, the license ID list includes a plurality of combinations including the license IDs and the terms of validity. While details will be described hereinafter, the license ID list in addition to the status information is deleted by the recording management section 220 when destruction of data corresponding to at least one of the status information and the license ID list occurs. As a result, by referring to the license ID list, the client 20 according to the embodiment can prevent the content data from being reproduced beyond the normal reproduction condition.

Here, returning to the description of the structure of the client 20, the memory section 224 is a storage medium used for recording the license ID list, the user key, the status information, and the license information or the like. In addition, as shown in Fig. 5, the license ID list, the user key, and the status information are recorded in a secure area. On the other hand, the license information is recorded in a non-secure area.

In addition, while in Fig. 5 the memory section 224 is shown as one block, the memory section 224 may be two or more storage media which are physically different from one another. In this case, the license ID list, the user key, the status information, and the license information may be recorded in different storage media respectively. For example, the license ID list, the user key, and the status information may be recorded in a storage medium embedded in the client 20, and the license information may be recorded in a storage medium detachably attached to the client 20.

In addition, a nonvolatile memory, a magnetic disk, an optical disk, and a magneto optical (MO) disk may be used as the storage medium. For example, an electrically erasable programmable read-only memory (EEPROM) and an erasable programmable ROM (EPROM) may be used as the nonvolatile memory. In addition, a hard disk and a disk-shaped magnetic disk may be used as the magnetic disk. In addition, a compact disc (CD), a digital versatile disc recordable (DVD-R), or a Blu-ray Disc (registered trademark) (BD) may be used as the optical disk.

The user operation section 228 is an interface which the user uses to input various instructions and various information to the client 20. For example, the user operation section 228 may be an operation section including a remote controller and a light receiving section or including a button group provided on the client 20. By using the user operation section 228, the user can instruct the client 20 to register the client 20 on the license server 10, to obtain the license information, and to reproduce the content data.

The license evaluation section 232 evaluates whether or not reproduction of the content data is allowed, on the basis of the license information corresponding to the content data, the initial reproduction time, and the license ID list.

Specifically, the license evaluation section 232 evaluates whether or not the reproduction condition, "within a predetermined period from initial reproduction", is satisfied, on the basis of whether or not the current time is within a predetermined period from the initial reproduction. Namely, the license evaluation section 232 evaluates whether or not the initial reproduction time, as an example of the reproduction history, satisfies the reproduction condition specified in the license information.

In addition, the license evaluation section 232 evaluates whether or not the reproduction condition, "within a predetermined period from transmission (purchase) of the license information", is satisfied, on the basis of whether or not the current time is within a period specified in the license information.

In addition, the license evaluation section 232 evaluates whether or not a user ID is included, as the registration information, in the status information. Furthermore, the license evaluation section 232 evaluates whether or not the license ID corresponding to the license information is included in the license ID list.

Then, when the license ID corresponding to the license information is included in the license ID list, the user ID is included in the status information, and all reproduction conditions specified in the license information are satisfied, the license evaluation section 232 allows the content data to be reproduced. On the other hand, when the license ID corresponding to the license information is not included in the license ID list, the license evaluation section 232 does not allow the content data to be reproduced, regardless of whether or not all reproduction conditions specified in the license information are satisfied.

In addition, the license evaluation section 232 may perform an evaluation relating to the reproduction conditions specified in the license information or an evaluation relating to the user ID, after performing an evaluation relating to the license ID. Then, when the license ID corresponding to the license information is not included in the license ID list, the license evaluation section 232 may determine not to allow reproduction of the content data, without performing other evaluations.

The reproduction section 236 reproduces the content data which the license evaluation section 232 allows to be reproduced. For example, the reproduction section 236 decodes the content data by using a content key included in the corresponding license information. The content data reproduced by the reproduction section 236 is displayed on the display device and output as an audio signal from the audio output device.

In addition, the client 20 may obtain the content data by using a streaming method or a downloading method. The streaming method is a method in which a content distribution source distributes the content data in synchronization with a reproduction speed of the content data at the client 20. Namely, the streaming method is a method in which the content data is reproduced with being received, from the client 20's viewpoint. On the other hand, the downloading method is a method in which the client 20 initiates reproduction of the content data after all the content data is distributed to the client 20.

### [3. Operation of Client Server System]

As above, the configuration of the client 20 is described with reference to Figs. 4 to 7. Operations in the client server system 1 according to the embodiment will be described with reference to Figs. 8 to 20, hereinafter.

### (3-1. Registration Processing for Client)

Fig. 8 is a diagram illustrating a flow of registration processing for the client 20 in the client server system 1 according to the embodiment. As shown in Fig. 8, first when the client 20 requests a user key from the license server 10 (S304), the license server 10 transmits the user key (public key) assigned to a user at the client 20 to the client 20 (S308).

Next, when the client 20 requests the license server 10 to perform registration (S312), the license server 10 registers the device ID of the client 20, the device ID being associated with the user ID (S314). Then, the license server 10 transmits the user key (secret key) assigned to the user at the client 20 to the client 20 (S316).

Here, in addition to the user key (secret key), the license server 10 transmits information which instructs the client 20 to record a user ID. Therefore, on the basis of the instruction from the license server 10, the recording management section 220 in the client 20 adds, as registration information, the user ID corresponding to the user at the client 20 to the status information (S320). After that, the client 20 notifies the license server 10 of completion of registration (S329).

In addition, the recording management section 220 records the user keys (the public key and the secret key) transmitted from the license server 10 in the memory section 224, for example in such a data structure shown in Fig. 6. In addition, the license server 10 may assign the public key and the secret key to the user when the user key is requested in S304.

Through a series of processing operations mentioned above, the client 20 is registered in the license server 10 and the user ID is added, as registration information, to the status information recorded in the client 20. Here, the meaning of performing the registration processing in the license server 10 as shown in S314 before the user ID is added to the status information recorded in the client 20 will be described.

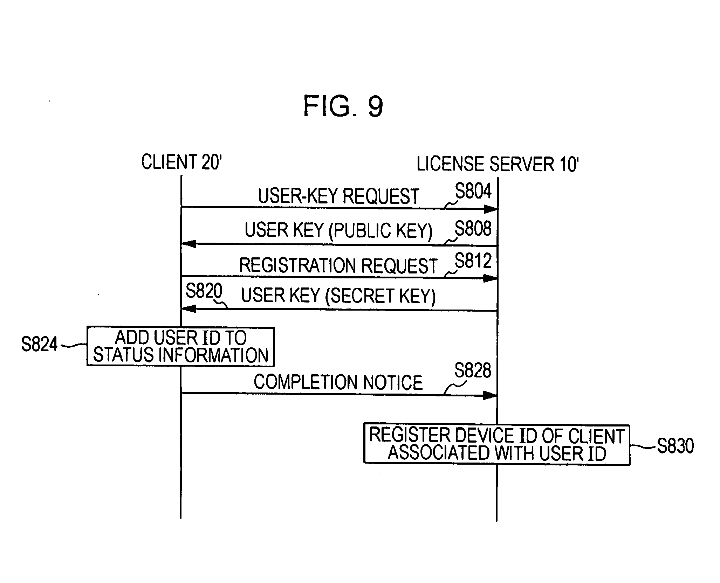

Fig. 9 is a diagram illustrating a flow of registration processing for the client 20' in the license server 10' and the client 20', both relating to the embodiment. When the client 20' requests a user key from the license server 10' (S804), the license server 10' transmits the user key (public key) assigned to a user at the client 20' to the client 20' (S808).

Next, when the client 20' requests the license server 10' to perform registration (S812), the license server 10' transmits the user key (secret key) assigned to a user at the client 20' to the client 20' (S820).

Then, the client 20' adds, as registration information, the user ID corresponding to the user at the client 20' to the status information (S824) and notifies the license server 10' of completion of registration (S828). After that, the license server 10' registers the device ID of the client 20', the device ID being associated with the user ID (S830).

In this way, in the license server 10' and the client 20', both relating to the embodiment, the registration processing, performed in the license server 10 in S830, is performed after in S824 the user ID is added to the status information recorded in the client 20'. Therefore, if the processing is suspended between in S824 and in S830, the mismatch that the client 20' is in an "unregistered" state in the license server 10' and the user ID is in a "registered" state in the client 20' occurs. However, in this case, since there is a possibility that the clients 20' more than an upper limit on the number of registrations of the clients 20' in the license server 10' are managed as in a "registered" state, the above-mentioned mismatch is undesirable.

On the other hand, in the client server system 1 according to the embodiment, as mentioned above, the registration processing in the license server 10 in S314 is performed before in S320 the user ID is added to the status information recorded in the client 20. Therefore, while the mismatch that the client 20 is in a "registered" state in the license server 10 and the user ID is in an "unregistered" state in the client 20 may occur, the mismatch that the client 20 is in an "unregistered" state in the license server 10 and the user ID is in a "registered" state in the client 20 can be prevented from occurring.

In addition, there is considered the case that a registration request is performed when the client 20 is in a "registered" state in the license server 10 and the user ID is in an "unregistered" state in the client 20. In this case, since the client 20 is already in a "registered" state in the license server 10, the license server 10 is assumed to perform processing for rejecting the registration request. However, if the license server 10 rejects the registration request, the mismatched state is not resolved. Therefore, the license server 10 may retransmit the same information as in S308 and S316 to the client 20. Accordingly, since the client 20 can add the user ID, as registration information, to the status information, the mismatch that the client 20 is in a "registered" state in the license server 10 and the user ID is in an "unregistered" state in the client 20 can be resolved. Incidentally, when a user ID is recorded in the client, the client is regarded as being in a "registered" state in the client itself in terms of the user ID. In addition, when a user ID is not recorded in the client, the client is regarded as being in an "unregistered" state in the client 20' itself in terms of the user ID.

### (3-2. Registration-Deletion Processing for Client)

Fig. 10 is a diagram illustrating a flow of registration-deletion processing for the client 20 in the client server system 1 according to the embodiment. As shown in Fig. 10, first when the client 20 requests the license server 10 to perform registration-deletion request (S332), the license server 10 allows the client 20 to perform registration-deletion (S340).

Then, since the registration-deletion allowance includes information which instructs the client 20 to delete the user ID from the status information, the recording management section 220 in the client 20 deletes the user ID as registration information included in the status information (S344). After that, when the client 20 notifies the license server 10 of completion of registration deletion (S348), the license server 10 deletes the device ID of the client 20, the device ID being associated with the user ID of the user at the client 20 (S350).

Through a series of processing operations mentioned above, the registration of the client 20 in the license server 10 is deleted and the user ID as registration information is deleted from the status information in the client 20. Here, the meaning of performing the deletion processing in the license server 10 as shown in S350 after the deletion processing in the client 20 as shown in S344 will be described.

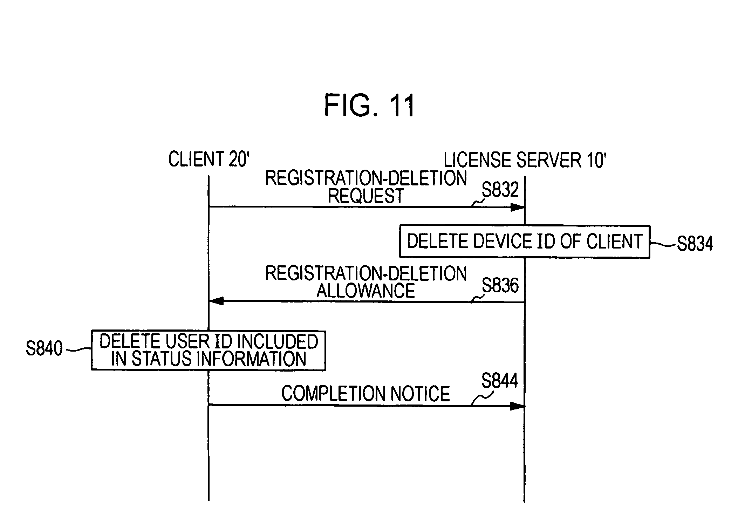

Fig. 11 is a diagram illustrating a flow of registration-deletion processing for the client 20' in the license server 10' and the client 20', both relating to the embodiment. As shown in Fig. 11, first when the client 20' requests the license server 10' to perform registration-deletion request (S832), the license server 10' deletes the device ID of the client 20', the device ID being associated with the user ID of the user at the client 20' (S834).

After that, when the license server 10' allows the client 20' to perform registration-deletion (S836), the client 20' deletes the user ID as registration information included in the status information (S840). Then, the client 20' notifies the license server 10' of completion of registration deletion (S844).

In this way, in the license server 10' and the client 20', both relating to the embodiment, the deletion processing in the license server 10 as shown in S834 is performed before the deletion processing in the client 20 as shown in S840. Therefore, if the processing is suspended between in S834 and in S840, the mismatch that the client 20' is in an "already deleted" state in the license server 10' and the user ID is in a "registered" state in the client 20' occurs. However, in this case, since there is a possibility that the clients 20' more than an upper limit on the number of registrations of the clients 20' in the license server 10' are managed as in a "registered" state, the above-mentioned mismatch is undesirable.

On the other hand, in the client server system 1 according to the embodiment, as mentioned above, the deletion processing in the license server 10 as shown in S350 is performed after the deletion processing in the client 20 as shown in S344. Therefore, while the mismatch that the client 20 is in a "registered" state in the license server 10 and the user ID is in an "already deleted" state in the client 20 may occur, the mismatch that the client 20 is in an "already deleted" state in the license server 10 and the user ID is in a "registered" state in the client 20 can be prevented from occurring.

In addition, when the client 20 is in a "registered" state in the license server 10 and the user ID is in an "already deleted" state in the client 20, the client 20 is not capable of initiating the registration-deletion processing because the user ID is not in a "registered" state. In this case, the client 20 can put the client 20 and the user ID into "already deleted" states in the license server 10 and in the client 20 respectively, by requesting registration-deletion processing after performing registration processing. Incidentally, when a user ID is already deleted from the client, the client is regarded as being in an "already deleted" state in the client itself in terms of the user ID.

### (3-3. Acquisition of License Information and Reproduction Control for Content data)

Next, after clarifying the issue of the license server 10' and the client 20', both relating to the embodiment, acquisition of license information and reproduction control for content data in the client server system 1 according to the embodiment will be described.

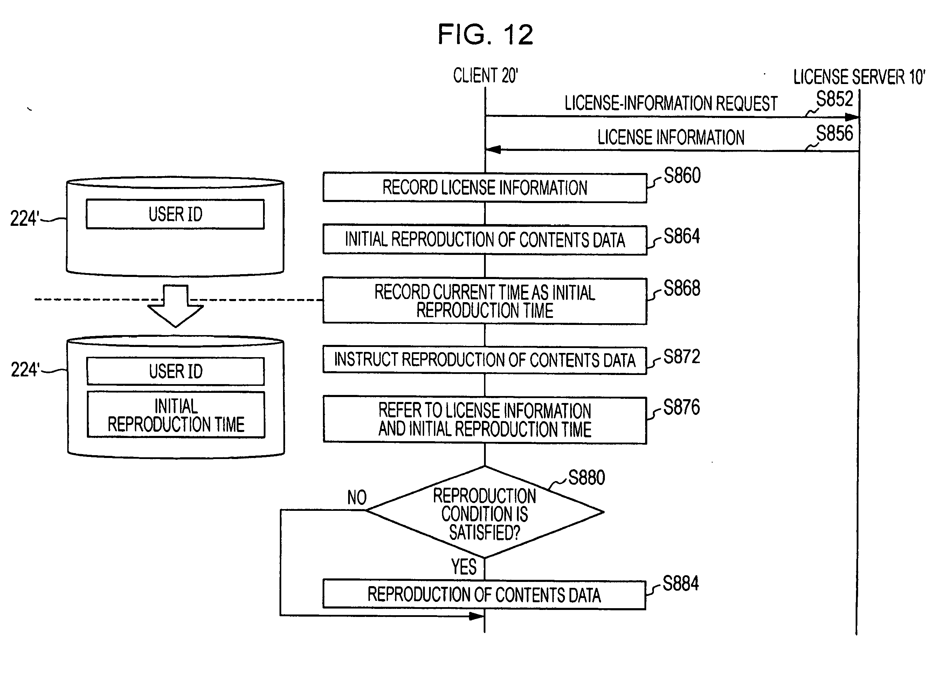

Fig. 12 is a diagram illustrating a flow of reproduction control performed by the client 20' relating to the embodiment. As shown in Fig. 12, first when the client 20' requests license information from the license server 10' (S852), the license server 10' transmits the license information to the client 20' (S856).

Then, after recording the license information (S860), the client 20' performs initial reproduction of the content data (S864) and records the current time as the initial reproduction time in the memory section 224' (S868).

After that, when the client 20' is instructed to perform the second or later reproduction of the content data (S872), the client 20' refers to the license information and the initial reproduction time (S876). Then, when a reproduction condition specified in the license information is satisfied (S880), the client 20' performs reproduction of the content data (S844).

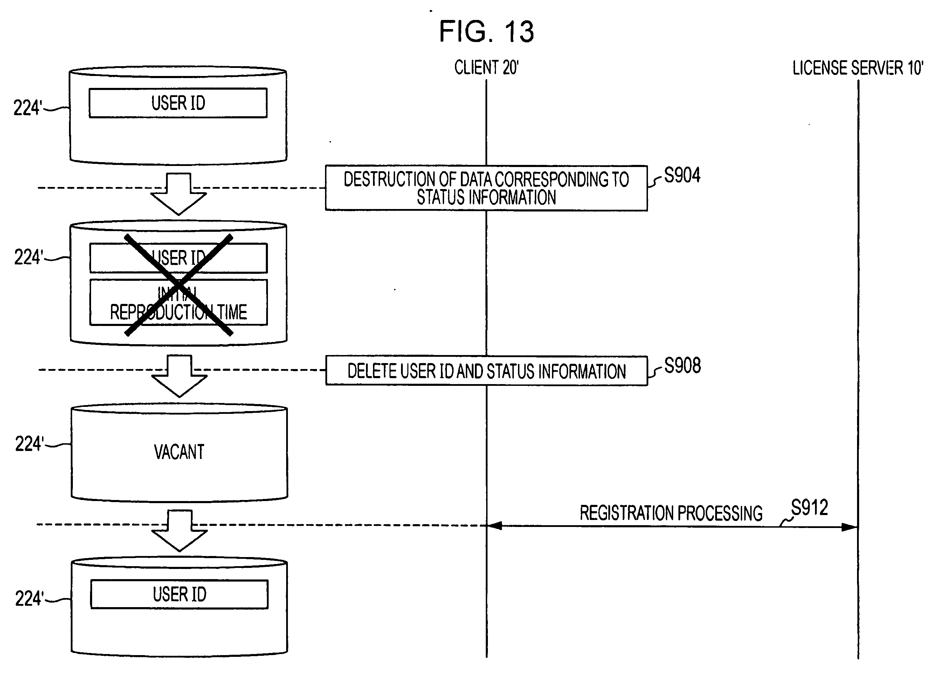

Fig. 13 is a diagram illustrating a flow of processing performed, at the time of destruction of data, by the client 20' relating to the embodiment. As shown in Fig. 13, when destruction of data corresponding to the status information such as the initial reproduction time occurs in the memory section 224' (S904), the client 20' deletes the initial reproduction time and the user ID as registration information from the memory section 224' (S908).

After that, the client 20' and the license server 10' perform the registration processing again. Accordingly, the user ID as the registration information is recorded in the memory section 224' in the client 20' (S912).

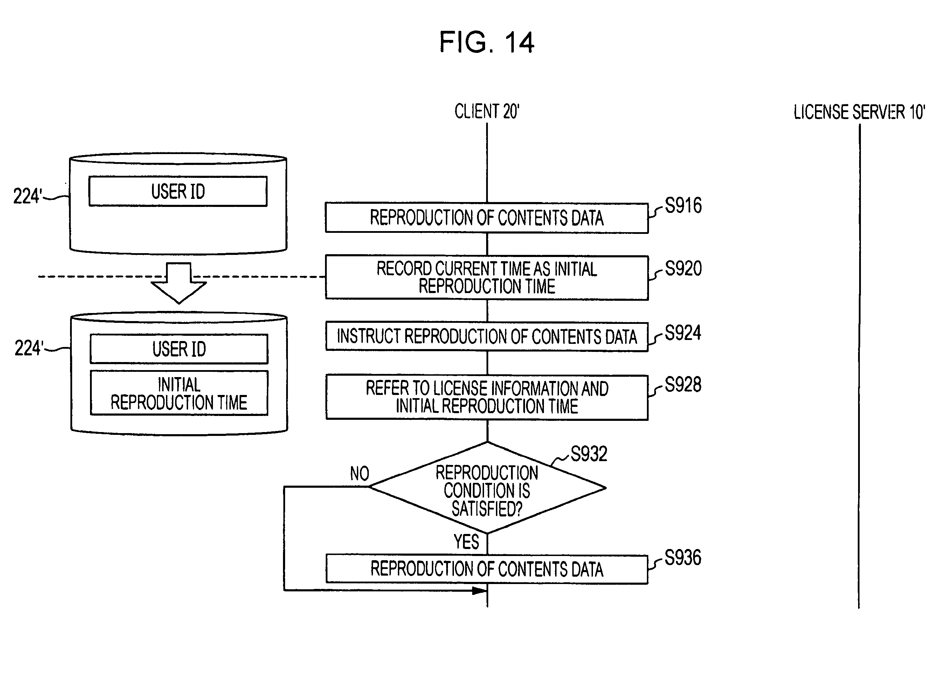

Fig. 14 is a diagram illustrating a flow of reproduction control performed, after destruction of data, by the client 20' relating to the embodiment. As shown in Fig. 14, when the client 20' reproduces the content data (S916), the client 20' records the current time as the initial reproduction time in the memory section 224' (S920) because the initial reproduction time has not been recorded in the memory section 224'. Namely, even though the reproduction in S916 is actually the second or later reproduction, the client 20' handles the reproduction in S916 as the initial reproduction.

After that, when the client 20' is instructed to perform reproduction of the content data (S924), the client 20' refers to the license information and the initial reproduction time (S928). Then, when a reproduction condition specified in the license information is satisfied (S932), the client 20' performs reproduction of the content data (S936).

As mentioned above, when destruction of data occurs, the client 20' relating to the embodiment actually handles the second or later reproduction as the initial reproduction. Therefore, in the client 20' relating to the embodiment, there occurs a problem that the content data can be reproduced beyond the reproduction condition that "within a predetermined period from initial reproduction".

Then, by taking the above-mentioned circumstances into account, the client 20 according to the embodiment is configured. The client 20 according to the embodiment can prevent the content data from being reproduced beyond the normal reproduction condition. Acquisition of license information and reproduction control for content data in the client 20 according to the embodiment will be described with reference to Figs. 15 to 17 hereinafter.

Fig. 15 is a diagram illustrating a flow of reproduction control performed by the client 20 according to the embodiment. As shown in Fig. 15, first when the client 20 requests license information from the license server 10 (S404), the license server 10 transmits the license information to the client 20 (S408).

Then, the recording management section 220 in the client 20 records the license information in the memory section 224 (S412). Furthermore, the recording management section 220 in the client 20 adds the license ID corresponding to the license information and the term of validity to the license ID list (S416).

After that, when the reproduction section 236 in the client 20 performs the initial reproduction of the content data (S420), the recording management section 220 records the current time as the initial reproduction time in the memory section 224 (S424). In addition, while description is omitted, the license evaluation section 232 evaluates whether or not a reproduction condition specified in the license information is satisfied and whether or not the user ID as registration information is recorded.

After that, when performing the second or later reproduction of the content data is instructed (S428), the license evaluation section 232 in the client 20 evaluates whether or not the license ID of the license information corresponding to the content data is recorded in the license ID list (S432). Then, when the license ID is recorded in the license ID list, the license evaluation section 232 refers to the license information and the initial reproduction time (S436). Then, when the reproduction condition specified in the license information is satisfied (S440), the license evaluation section 232 allows the reproduction section 236 to reproduce the content data and causes the reproduction section 236 to reproduce the content data (S444).

On the other hand, when the corresponding license ID is not recorded in the license ID list or the reproduction condition specified in the license information is not satisfied, the license evaluation section 232 does not allow the reproduction section 236 to reproduce the content data.

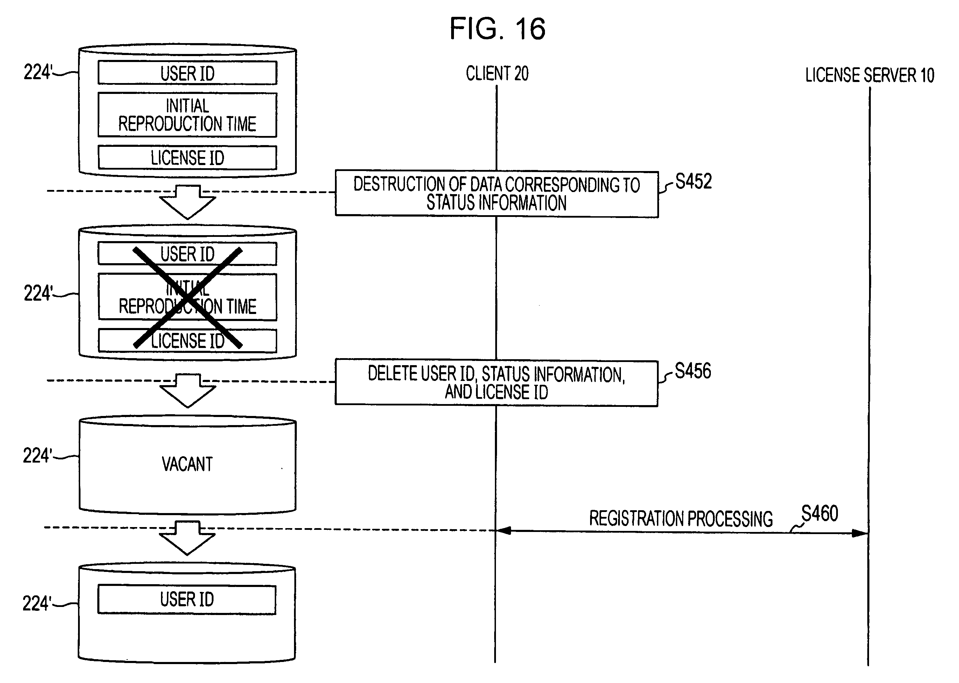

Fig. 16 is a diagram illustrating a flow of processing performed, at the time of destruction of data, by the client 20 according to the embodiment. As shown in Fig. 16, when destruction of data corresponding to the status information such as the initial reproduction time occurs in the memory section 224 (S452), the recording management section 220 in the client 20 deletes information recorded in the memory section 224 (S456). Specifically, the recording management section 220 deletes the status information, the user ID as the registration information, and the license ID from the memory section 224. In addition, in the embodiment, it is assumed that the license information remains in the memory section 224 without being deleted.

After that, the client 20 and the license server 10 perform the registration processing again. Therefore, the user ID as the registration information is recorded in the memory section 224 in the client 20 (S460).

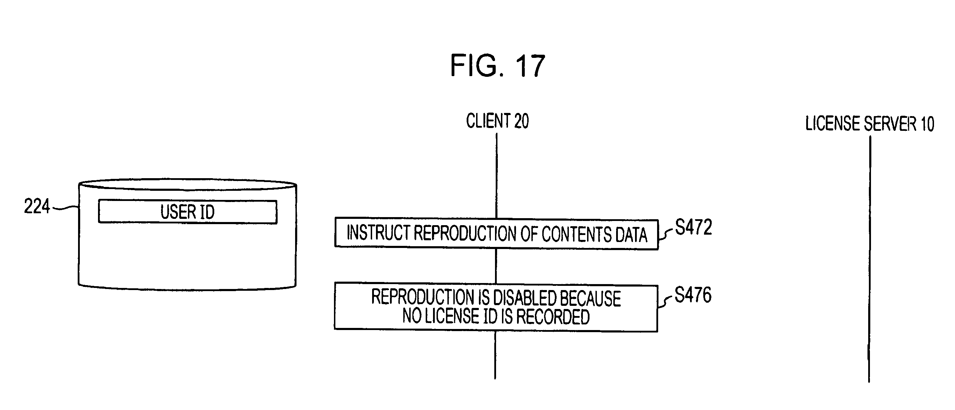

Fig. 17 is a diagram illustrating a flow of reproduction control performed, after destruction of data, by the client 20 according to the embodiment. As shown in Fig. 17, when performing reproduction of the content data is instructed (S472), the license evaluation section 232 in the client 20 evaluates whether or not the license ID of the license information corresponding to the content data is recorded in the license ID list. However, since the license ID list is deleted in S456 as shown in Fig. 16 and also the corresponding license ID is not recorded, the license evaluation section 232 does not allow reproduction of the content data (S476).

In this way, the client 20 according to the embodiment records the license ID corresponding to the duly obtained license information in the license ID list. In addition, the client 20 also deletes the license ID list when destruction of data corresponding to the status information such as the initial reproduction time occurs. Then, when the license ID of the license information corresponding to the content data is not included in the license ID list, the client 20 does not allow the content data to be reproduced.

By using the above-mentioned configuration, even though the reproduction history such as the initial reproduction time is intentionally destroyed, the client 20 according to the embodiment can prevent the content data from being reproduced beyond the normal reproduction condition specified in the license information.

### (3-4. Processing at the time of Destruction of Data)

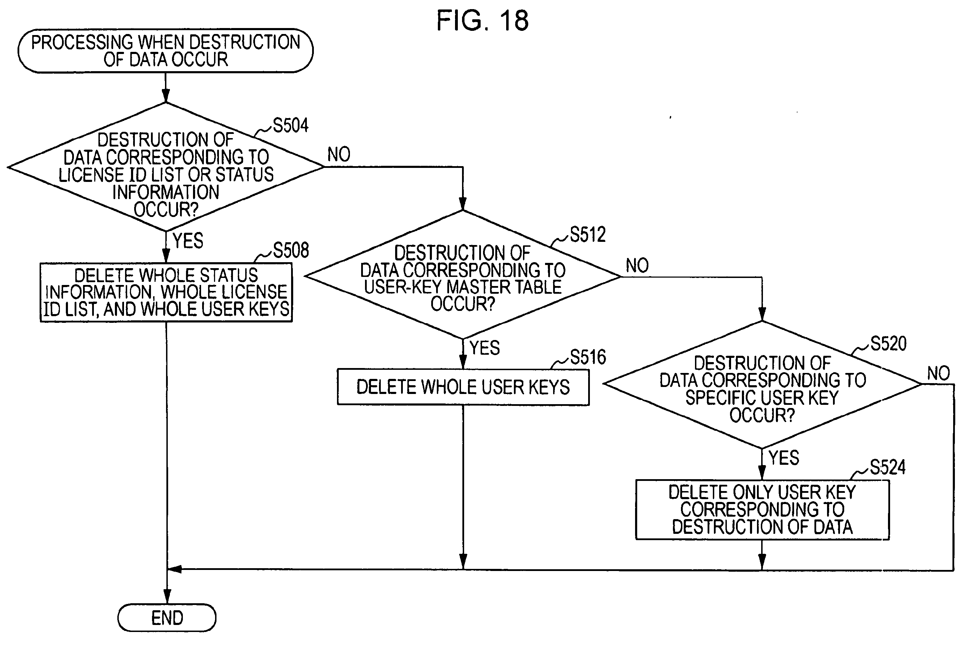

As mentioned above, the client 20 according to the embodiment deletes the license ID list at the time of destruction of data in the memory section 224. However, in addition to the intentional destruction of data, it is assumed that inevitable destruction of data occurs because of an accident. Then, it is expected that a loss which the user suffers is reduced by performing different operations according to the situation of data in which destruction of data occurs, as shown in Fig. 18.

Fig. 18 is a flowchart illustrating processing performed by the recording management section 220 at the time of destruction of data. As shown in Fig. 18, when destruction of data corresponding to the license ID list or the status information occurs (S504), the recording management section 220 deletes whole status information, whole license ID list, and whole user keys from the memory section 224 (S508).

In addition, when destruction of data corresponding to the user-key master table occurs (S512), the recording management section 220 deletes whole user keys from the memory section 224 (S516) because it is difficult to search user keys in the memory section 224.

On the other hand, when destruction of data corresponding to a specific user key occurs (S520), the recording management section 220 deletes only the user key corresponding to the destroyed data (S524). In addition, since the recording management section 220 records the user keys in such a data structure shown in Fig. 6, destruction of data corresponding to individual user keys can be detected.

### (3-5. Management of License ID List)

As mentioned above, the license ID list plays a key role in the embodiment. However, if license IDs corresponding to all of the obtained license information are recorded in the license ID list, a problem occurs in such a way that the data size of the license ID list becomes large and storage capacity is exceeded.

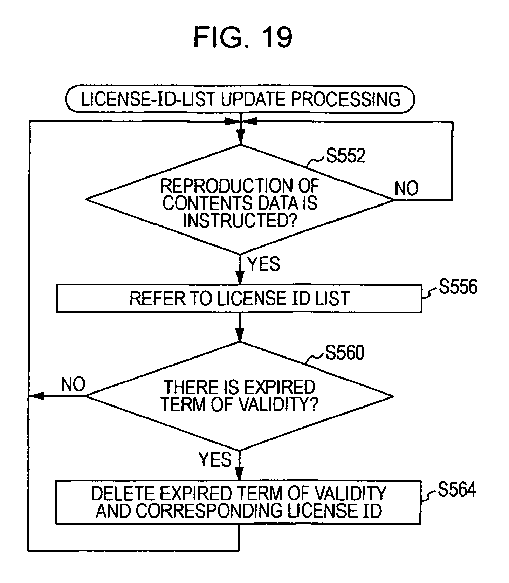

Then, the recording management section 220 may choose only license information, which includes a reproduction condition specifying a term of validity such as the condition that "within a predetermined period from transmission (purchase) of the license information" or the like, for addition of the license ID and evaluation. In addition, the recording management section 220 may update the license ID list by using processing shown in Fig. 19 and prevent the data size of the license ID list from becoming large.

Fig. 19 is a flowchart illustrating a flow of management of the license ID list, the management being performed by the recording management section 220. As shown in Fig. 19, when the user instructs reproduction of the content data by using the user operation section 228 (S552), the recording management section 220 refers to the license ID list (S556). Then, the recording management section 220 determines whether or not there is an expired term of validity among the terms of validity associated with the license IDs as shown in Fig. 7 (S560).

Here, even though the license ID is included in the license ID list, the expired license information is not capable of causing the content data to be reproduced. Therefore, it is not necessary for the license ID to be maintained in the license ID list. Accordingly, when there is an expired term of validity, the recording management section 220 deletes the expired term of validity and the corresponding license ID from the license ID list (S564). As a result, the data size of the license ID list can be prevented from becoming large, as mentioned above.

### (3-6. Transfer of License Information between Clients)

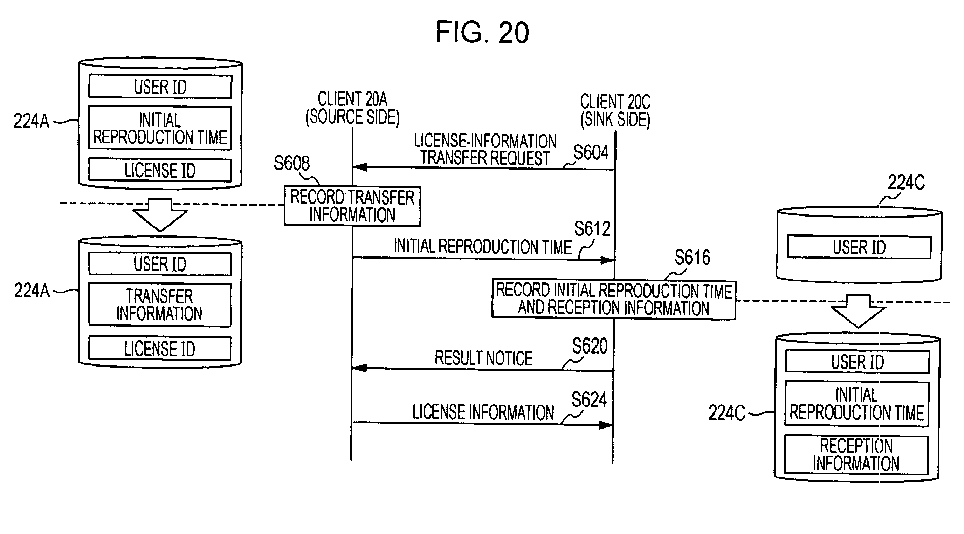

While the example that the client 20 obtains the license information from the license server 10 is described as above, the embodiment is not limited to the example. For example, the client 20 may obtain the license information from other client 20. The case that the license information is transferred from the client 20A to the client 20C will be described with reference to Fig. 20 hereinafter.

Fig. 20 is a diagram illustrating a flow of processing performed when the license information is transferred between the clients 20. As shown in Fig. 20, the client 20C, a sink side of license information, make a transfer request to a source side of license information (S604). Then, the recording management section 220A in the client 20A records transfer information (specific information), which indicates that the license information requested by the client 20C is to be transferred, in the memory section 224A (S608). After that, the client 20A transmits the initial reproduction time corresponding to the license information to the client 20C (S612).

When the client 20C receives the initial reproduction time from the client 20A, the client 20C records the initial reproduction time and reception information in the memory section 224C (S616). Then, after the client 20C notifies the client 20A of a result (S620), the client 20A transfers the license information to the client 20C (S624). In more details, the client 20A obtains a user key (public key) corresponding to the client 20C, for example, in S604 and encrypts once again a content key included in the license information to be transferred, by using the user key (public key) corresponding to the client 20C.

As mentioned above, when the transfer processing is performed, the transfer information is recorded in the client 20A, the source side, and the reception information is recorded in the client 20C, the sink side. The transfer information indicates that corresponding license information is transferred and reproduction based on the license information is disabled in a self device. Therefore, after the license information is transferred, the license evaluation section 232A in the client 20A does not allow reproduction of content data based on the transferred license information.

On the other hand, the reception information indicates that corresponding license information is obtained by transfer and reproduction based on the license information is possible in a self device. Therefore, since the reception information is recorded in the memory section 224C, the license evaluation section 232C in the client 20C allows the content data to be reproduced on the basis of the license information obtained by transfer, when other conditions are satisfied. Namely, when neither the license ID nor the reception information is recorded, the license evaluation section 232 does not allow reproduction of the content data. Then, when one of the license ID and the reception information is recorded and other conditions are satisfied, the license evaluation section 232 allows reproduction of the content data.

In addition, when the license information is transferred, it is not necessary for the client 20A to delete a corresponding license ID from the license ID list. Examples of the reason are as follows.
(1) even though the license ID is not deleted, reproduction of the content data on the basis of the license information in the client 20A can be restricted.
(2) when the license ID list is managed on the storage medium in which the number of times writing is performed is restricted, the number of times writing is performed is hoped to be decreased as much as possible.
(3) as shown in Fig. 19, a license ID corresponding to an expired term of validity is deleted.
(4) it is assumed that communication between the clients 20 fails. Therefore, for example, processing which confirms whether or not the communication terminates normally is necessary for deleting the corresponding license ID when the license information is transferred.

### (3-7. Destruction and Restoration of User Key)

The user key is recorded in the secure memory area as mentioned with reference to Fig. 5. However, the number of user keys able to be recorded is limited depending on the size of the secure memory area in the client 20. Then, the recording management section 220 may perform destruction and restoration of user keys recorded in the secure area in the memory section 224, as necessary.

Specifically, when the memory area in the memory section 224 is insufficient for recording a new user key at the time of acquisition (registration processing) of the new user key from the license server 10, the recording management section 220 destroys (deletes), for example, one or more arbitrary user keys from the memory section 224. By performing the destruction of the user keys, the memory area used for recording the new user key is obtained. Therefore, the new registration processing can be completed. In addition, when one or more user keys are destroyed, the license information, which is obtained by the users corresponding to the destroyed user keys, becomes not capable of being used for reproducing the content data.

On the other hand, the license information, which is not capable of being used because of the destruction of the user key, becomes once again capable of being used by performing once again registration processing of the client 20 as a device utilized by the user who obtains the license information and restoring (recording) the user key.

For example, it is assumed that up to two user keys can be recorded in the secure memory area in the client 20B and as shown in Fig. 2 the user key A and the user key B are already recorded in the secure memory area in the client 20B. In this case, the recording management section 220B in the client 20B destroys the user key A and obtains a user key C from the license server 10 by registering the client 20B as a device utilized by a new user C. Accordingly, the recording management section 220B can record the user key C in the secure memory area.

Here, the license information which includes the content key encrypted by the user key A becomes not capable of being used. However, for example, the recording management section 220B in the client 20B destroys the user key B and restores the user key A by performing once again registration processing of the client 20B as a device utilized by the user A. Accordingly, the license information becomes once again capable of being used.

### [4. General Overview]

As mentioned above, the client 20 according to the embodiment records the license ID corresponding to the duly obtained license information in the license ID list. In addition, the client 20 also deletes the license ID list when destruction of data corresponding to the status information such as the initial reproduction time occurs. Then, when the license ID of the license information corresponding to the content data is not included in the license ID list, the client 20 does not allow the content data to be reproduced.

By using the above-mentioned configuration, even though the reproduction history such as the initial reproduction time is intentionally destroyed, the client 20 according to the embodiment can prevent the content data from being reproduced beyond the normal reproduction condition specified in the license information.

In addition, in the embodiment, since the recording management section 220 deletes a license ID which is included in the license ID list and associated with an expired term of validity, the data volume of the license ID list can be restricted.

In addition, in the embodiment, registration processing in the license server 10 is performed before a user ID is added to the status information in the client 20. Therefore, even though communication between the client 20 and the license server 10 is interrupted in the middle of the registration processing, the mismatch that the client 20 is in an "unregistered" state in the license server 10 and the user ID is in a "registered" state in the client 20 can be prevented from occurring.

In the same way, in the embodiment, registration processing of the client 20 in the license server 10 is performed after deletion processing is performed in the client 20. Therefore, even though communication between the client 20 and the license server 10 is disconnected in the middle of the registration-deletion processing, the mismatch that the client 20 is in an "already deleted" state in the license server 10 and the user ID is in a "registered" state in the client 20 can be prevented from occurring.

In addition, according to the embodiment, the recording management section 220 performs destruction and restoration of user keys recorded in the secure area in the memory section 224. Accordingly, the client 20 can deal with more users than a number assumed on the basis of the capacity of the secure area.

As above, example embodiments of the present invention were described in detail with reference to figures. However, embodiments of the present invention are not limited to the above-described embodiments. It should be understood by those skilled in the art that various modifications, combinations, sub-combinations and alterations may occur depending on design requirements and other factors insofar as they are within the scope of the appended claims.

For example, individual steps of processing in the client 20 according to the specification are not necessarily performed in temporal sequence along the order described in the sequence diagrams or the flowcharts. For example, individual steps of processing in the client 20 may include processing performed in parallel or individually (for example, parallel processing or object-based processing).

In addition, computer programs, which have the same functions as the hardware, such as the CPU 201, the ROM 202, and the RAM 203, included in the client 20, respectively can be created. In addition, a storage medium storing the computer programs is provided. In addition, by configuring, in hardware, individual function blocks in the function block diagram as shown in Fig. 5, a series of processing operations can be realized in hardware.

The present application contains subject matter related to that disclosed in Japanese Priority Patent Application JP 2009-072673 filed in the Japan Patent Office on March 24, 2009.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A content reproducing device (20) comprising:
a communication section (216) configured to receive license information corresponding to content data;
a recording management section (220) configured to record the license information, reproduction history of the content data, and identification information of the license information in a storage medium (224);
a reproduction section (236); and
a license evaluation section (232) configured to allow the reproduction section to reproduce the content data when the reproduction history satisfies a reproduction condition specified in the license information and the identification information of the license information is recorded in the storage medium, and not to allow the reproduction section to reproduce the content data when the identification information of the license information is not recorded in the storage medium;
wherein the recording management section is configured to delete the identification information of the license information recorded in the storage medium when destruction of data corresponding to the reproduction history of the content data occurs in the storage medium.

2. The content reproducing device according to claim 1 , wherein
the recording management section is configured to record the identification information of the license information, the identification information being associated with information indicating a term of validity, in the recording medium, and to delete an expired term of validity and the identification information of the license information, the identification information being associated with the expired term of validity, from the storage medium.

3. The content reproducing device according to claim 1 , wherein
the license information includes a content key used for decoding corresponding content data,
the content key is encrypted in such a manner that the encrypted content key can be decoded by using a user key corresponding to a user as an object to which the license information is provided, and
the recording management section is configured to record the one or more user keys, which are provided by the license providing device providing the license information, in the storage medium, and to delete the one or more user keys in addition to the identification information of the license information from the storage medium when destruction of data corresponding to the reproduction history of the content data occurs in the storage medium.

4. The content reproducing device according to claim 3, wherein
the recording management section is configured to delete at least one of the one or more user keys recorded in the storage medium if a user key which is not recorded in the storage medium is obtained from the license providing device and there is insufficient memory area for the obtained user key in the storage medium.

5. The content reproducing device according to claim 3, wherein
the recording management section is configured to record the one or more user keys in the storage medium in such a structure that individual destruction of data corresponding to the one or more user keys can be detected.

6. The content reproducing device according to claim 1 wherein
the recording management section is configured to record specific information in the storage medium when the license information is transferred from the communication section to an information processing device, and
the license evaluation section is configured to not allow the reproduction section to reproduce the content data when the specific information is recorded in the storage medium.

7. A content reproducing method comprising the steps of:
receiving (S408) license information;
recording (S412) the license information and identification information of the license information in a storage medium;
reproducing (5420) content data on the basis of the license information;
recording (S424) reproduction history of the content data;
allowing (5432, S440, S444) the reproduction section to reproduce the content data when the reproduction history satisfies a reproduction condition specified in the license information and the identification information of the license information is recorded in the storage medium; and
not allowing the reproduction section to reproduce the content data when the identification information of the license information is not recorded in the storage medium;
wherein when destruction of data corresponding to the reproduction history of the content data occurs in the storage medium, the identification information of the license information recorded in the storage medium is deleted.

## Patentansprüche

1. Inhalts-Wiedergabevorrichtung (20), umfassend:
einen Kommunikationsabschnitt (216), der konfiguriert ist für den Empfang einer Inhaltsdaten entsprechenden Lizenzinformation;
einen Aufzeichnungs-Verwaltungsabschnitt (220), der konfiguriert ist, um eine Lizenzinformation, eine Wiedergabe-Historie der Inhaltsdaten und eine Identifikations-Information der Lizenzinformation in einem Speichermedium (224) aufzuzeichnen;
einen Wiedergabeabschnitt (236);
und einen Lizenz-Bewertungsabschnitt (232), der konfiguriert ist, um dem Wiedergabeabschnitt zu ermöglichen, die Inhaltsdaten wiederzugeben, wenn die Wiedergabe-Historie einer in der Lizenzinformation spezifizierten Wiedergabebedingung genügt und die Identifikations-Information der Lizenzinformation in dem Speichermedium aufgezeichnet ist, und um dem Wiedergabeabschnitt nicht zu ermöglichen, die Inhaltsdaten wiederzugeben, wenn die Identifikations-Information der Lizenzinformation nicht in dem Speichermedium aufgezeichnet ist;
wobei der Aufzeichnungs-Verwaltungsabschnitt konfiguriert ist, um die Identifikations-Information der in dem Speichermedium aufgezeichneten Lizenzinformation zu löschen, wenn eine Zerstörung von der Wiedergabe-Historie der Inhaltsdaten entsprechenden Daten in dem Speichermedium auftritt.

2. Inhalts-Wiedergabevorrichtung nach Anspruch 1, wobei der Aufzeichnungs-Verwaltungsabschnitt konfiguriert ist, um die Identifikations-Information der Lizenzinformation in dem Aufzeichnungsmedium aufzuzeichnen, wobei die Identifikations-Information einer Information zugeordnet ist, welche eine Gültigkeitsdauer angibt,
und um die abgelaufene Gültigkeitsdauer und die Identifikations-Information der Lizenzinformation aus dem Speichermedium zu löschen, wobei die Identifikations-Information der abgelaufenen Gültigkeitsdauer zugeordnet ist.

3. Inhalts-Wiedergabevorrichtung nach Anspruch 1, wobei die Lizenzinformation einen Inhaltsschlüssel enthält, der für das Dekodieren entsprechender Inhaltsdaten benutzt wird,
wobei der Inhaltsschlüssel in einer solchen Weise verschlüsselt ist, dass der verschlüsselte Inhaltsschlüssel durch Verwendung eines Nutzerschlüssels dekodiert werden kann, der einen Benutzer als ein Objekt entspricht, für das die Lizenzinformation bereitgestellt wird bzw. ist,
und dass der Aufzeichnungs-Verwaltungsbereich konfiguriert ist, um den einen oder mehrere Nutzerschlüssel in dem Speichermedium aufzuzeichnen, die durch die Lizenz-Bereitstellungsvorrichtung bereitgestellt werden, welche die Lizenzinformation bereitstellt,
und um den einen oder die mehreren Nutzerschlüssel zusätzlich zu der Identifikations-Information der Lizenzinformation aus dem Speichermedium zu löschen, wenn eine Zerstörung von der Wiedergabe-Historie der Inhaltsdaten entsprechenden Daten in dem Speichermedium auftritt.

4. Inhalts-Wiedergabevorrichtung nach Anspruch 3, wobei der Wiedergabe-Verwaltungsabschnitt konfiguriert ist, um zumindest einen Schlüssel aus dem einen oder mehreren Benutzerschlüsseln zu löschen, die in dem Speichermedium aufgezeichnet sind, falls der Nutzerschlüssel, der nicht in dem Speichermedium aufgezeichnet ist, von der Lizenz-Bereitstellungsvorrichtung erhalten wird, und ungenügender Speicherbereich für den erhaltenen Nutzerschlüssel in dem Speichermedium vorhanden ist.

5. Inhalts-Wiedergabevorrichtung nach Anspruch 3, wobei der Aufzeichnungs-Verwaltungsabschnitt konfiguriert ist, um den einen oder die mehreren Nutzerschlüssel in dem Speichermedium in einer solchen Struktur aufzuzeichnen, dass eine individuelle Zerstörung von Daten entsprechend dem einen oder den mehreren Nutzerschlüsseln detektiert werden kann.

6. Inhalts-Wiedergabevorrichtung nach Anspruch 1, wobei der Aufzeichnungs-Verwaltungsabschnitt konfiguriert ist, um eine bestimmte bzw. spezifische Information in dem Speichermedium aufzuzeichnen, wenn die Lizenzinformation von dem Kommunikationsabschnitt zu einer Informationsverarbeitungsvorrichtung übertragen wird,
und wobei der Lizenz-Bewertungsabschnitt konfiguriert ist, um dem WiedergabeAbschnitt nicht zu ermöglichen, die Inhaltsdaten wiederzugeben, wenn die bestimmte bzw. spezifische Information in dem Speichermedium aufgezeichnet ist.

7. Inhalts-Wiedergabeverfahren, umfassend die Schritte:
Empfangen (S408) einer Lizenzinformation;
Aufzeichnen (S412) der Lizenzinformation und einer Identifikations-Information der Lizenzinformation in einem Speichermedium;
Wiedergeben (S420) von Inhaltsdaten auf der Grundlage der Lizenzinformation;
Aufzeichnen (S424) einer Wiedergabe-Historie der Inhaltsdaten;
Ermöglichen (S432, S440, S440), dass der Wiedergabeabschnitt die Inhaltsdaten wiedergibt, wenn die Wiedergabe-Historie einer in der Lizenzinformation spezifizierten Wiedergabe-Bedingung genügt, und die Identifikations-Information der Lizenzinformation in dem Speichermedium aufgezeichnet ist;
und Nichtermöglichen, dass der Wiedergabeabschnitt die Inhaltsdaten wiedergibt,
wenn die Identifikations-Information der Lizenzinformation nicht in dem Speichermedium aufgezeichnet ist;
wobei dann, wenn eine Zerstörung von der Wiedergabe-Historie der Inhaltsdaten entsprechenden Daten in dem Speichermedium auftritt, die Identifikations-Information der in dem Speichermedium aufgezeichneten Lizenzinformation gelöscht wird.

## Revendications

1. Dispositif de reproduction de contenu (20) comprenant :
une section de communication (216) configurée pour recevoir des informations de licence correspondant aux données du contenu ;
une section de gestion d'enregistrement (220) configurée pour enregistrer sur un support d'enregistrement (224) les informations de licence, l'historique de reproduction des données de contenu et des informations d'identification des informations de licence ;
une section de reproduction (236) ; et
une section d'évaluation de licence (232) configurée pour autoriser la section de reproduction à reproduire les données de contenu lorsque l'historique de reproduction satisfait à une condition de reproduction spécifiée dans les informations de licence et les informations d'identification des informations de licence sont enregistrées dans le support d'enregistrement et à ne pas autoriser la section de reproduction à reproduire les données de contenu lorsque les informations d'identification des informations de licence ne sont pas enregistrées dans le support d'enregistrement ;
dans lequel la section de gestion d'enregistrement est configurée pour effacer les informations d'identification des informations de licence enregistrées dans le support d'enregistrement lorsque se produit dans le support d'enregistrement une destruction des données correspondant à l'historique de reproduction des données de contenu.

2. Dispositif de reproduction de contenu selon la revendication 1, dans lequel
la section de gestion d'enregistrement est configurée pour enregistrer les informations d'identification des informations de licence, les informations d'identification étant associées à des informations indiquant une durée de validité dans le support d'enregistrement et effacer du support d'enregistrement une durée de validité expirée ainsi que les informations d'identification des informations de licence, les informations d'identification étant associées à la durée de validité expirée.

3. Dispositif de reproduction de contenu selon la revendication 1, dans lequel
les informations de licence comportent une clé de contenu utilisée pour décoder les données de contenu correspondantes,
la clé de contenu est chiffrée de telle manière que la clé de contenu chiffrée puisse être décodée en utilisant une clé d'utilisateur correspondant à un utilisateur comme objet auquel les informations de licence sont fournies, et
la section de gestion d'enregistrement est configurée pour enregistrer dans le support d'enregistrement la ou les clés d'utilisateur, qui sont fournies par le dispositif de fourniture de licence fournissant les informations de licence, et à effacer du support d'enregistrement la ou les clés d'utilisateur en plus des informations d'identification des informations de licence lorsque se produit dans le support d'enregistrement une destruction des données correspondant à l'historique de reproduction des données de contenu.

4. Dispositif de reproduction de contenu selon la revendication 3, dans lequel
la section de gestion d'enregistrement est configurée pour effacer du support d'enregistrement les au moins une ou plusieurs clés d'utilisateur enregistrées si une clé d'utilisateur qui n'est pas enregistrée dans le support d'enregistrement est obtenue depuis le dispositif de fourniture de licence et qu'il n'y a pas suffisamment de zone mémoire pour la clé d'utilisateur obtenue dans le support d'enregistrement.

5. Dispositif de reproduction de contenu selon la revendication 3, dans lequel
la section de gestion d'enregistrement est configurée pour enregistrer la ou les clés d'utilisateur dans le support d'enregistrement dans une structure telle que la destruction individuelle de données correspondant à la ou aux clés d'utilisateur puisse être détectée.

6. Dispositif de reproduction de contenu selon la revendication 1, dans lequel
la section de gestion d'enregistrement est configurée pour enregistrer des informations spécifiques dans le support d'enregistrement lorsque les informations de licence sont transférées de la section de communication à un dispositif de traitement d'informations, et
la section d'évaluation de licence est configurée pour ne pas permettre à la section de reproduction de reproduire les données de contenu lorsque les informations spécifiques sont enregistrées dans le support d'enregistrement.

7. Procédé de reproduction de contenu comprenant les étapes consistant à :
recevoir (S408) des informations de licence ;
enregistrer (S412) sur un support d'enregistrement les informations de licence et des informations d'identification des informations de licence ;
reproduire (S420) les données de contenu sur la base des informations de licence ;
enregistrer (S424) l'historique de reproduction des données de contenu ;
autoriser (5432, S440, S444) la section de reproduction à reproduire les données de contenu lorsque l'historique de reproduction satisfait à une condition de reproduction spécifiée dans les informations de licence et les informations d'identification des informations de licence sont enregistrées dans le support d'enregistrement ; et
ne pas autoriser la section de reproduction à reproduire les données de contenu lorsque les informations d'identification des informations de licence ne sont pas enregistrées dans le support d'enregistrement ;
dans lequel, lorsque se produit dans le support d'enregistrement une destruction des données correspondant à l'historique de reproduction des données de contenu, les informations d'identification des informations de licence enregistrées dans le support d'enregistrement sont supprimées.
